# EUROPÄISCHE PATENTSCHRIFT

(11) **EP 4 224 010 B1**
(45) Veröffentlichungstag und Bekanntmachung des Hinweises auf die Patenterteilung: **29.01.2025**
(21) Anmeldenummer: 23154889.2
(22) Anmeldetag: 03.02.2023
(51) Int. Cl.: F03D 3/00, F03D 3/06

(54) **ROTOR FÜR EINE VERTIKALE WINDKRAFTANLAGE**
ROTOR FOR A VERTICAL WIND TURBINE
ROTOR POUR ÉOLIENNE VERTICALE

(30) Priorität: 04.02.2022 AT 322022
(43) Veröffentlichungstag der Anmeldung: 09.08.2023
(73) Patentinhaber: Strudler, Michael, 7141 Podersdorf (AT); Strommer, Andreas, 7072 Mörbisch (AT)
(72) Erfinder: Strudler, Michael, 7141 Podersdorf (AT); Strommer, Andreas, 7072 Mörbisch (AT); Probst, Gerhard, 7053 Hornstein (AT); Probst, Guido, 7053 Hornstein (AT)
(74) Vertreter: Puchberger & Partner Patentanwälte

(56) Entgegenhaltungen:
- CN-A- 104 314 752
- JP-A- 2007 270 746
- US-A1- 2017 218 777

## Beschreibung

Die Erfindung betrifft einen Rotor für eine vertikale Windkraftanlage.

Windkraftrotoren sind bekannt und heute als horizontal rotierende Windräder, d. h. mit horizontal angeordneter Rotationsachse vielfach im Einsatz. Die horizontalen Windräder weisen zwar einen beachtlichen Wirkungsgrad auf, haben aber auch bekannte Nachteile, wie Windrichtungsnachführung, Geräuschentwicklung, starke einseitige Verschleißerscheinungen der Lager durch ihre horizontale Lage und Gewicht.

Aus diesem Grunde wurden vertikal rotierende Windräder mit vertikaler Achse konzipiert. Sie machen so gut wie keine Laufgeräusche, haben keine einseitige Lagerbelastung, es ist keine Windrichtungsnachführung notwendig und das Gewicht ist wesentlich geringer als beim horizontalen Windrad.

Vertikale Windräder umfassen in der Regel Rotoren, die als Widerstandsläufer oder als Auftriebsläufer ausgebildet sind. Ein Widerstandsläufer entnimmt dem Wind Leistung nach dem Widerstandsprinzip und wandelt diese in mechanische Leistung um. Dem Wind wird eine Fläche A entgegengestellt. Diese vermindert die Windströmung, somit entsteht eine Kraft, die die Fläche in Windrichtung schiebt. Widerstandläufer sind in ihren Drehzahlen begrenzt, denn sie können sich nur so schnell bewegen wie der Wind, der sie antreibt.

Bei modernen Windkraftanlagen sind die Rotoren als Auftriebsläufer ausgebildet und werden durch das Prinzip des aerodynamischen Auftriebs bewegt. Wenn der Wind auf ein Rotorblatt trifft, so wird Luft oberhalb und unterhalb des Blattes entlanggeführt. Die Strömung wird nach unten umgelenkt. Dabei entsteht oberhalb des Blattes ein Unterdruck (Saugseite) und unterhalb des Blattes ein Überdruck (Druckseite). Durch diese Druckdifferenz wird eine Auftriebskraft FA erzeugt, die senkrecht zur Anströmung steht, das Rotorblatt antreibt und somit den Rotor in Drehung versetzt. Der Darrieusrotor ist eine Ausführung eines Auftriebsläufers für vertikale Windkraftanlagen. Derartige Auftriebsläufer haben jedoch schlechte Anlaufeigenschaften, weswegen sie zum Anlaufen kurzzeitig angetrieben werden müssen. Bei stärkerem Wind erreichten sie allerdings beachtliche Drehzahlen und bremsen sich nicht aus wie Widerstandläufer. Beispiele für Windkraftanlagen mit Rotoren, die als Auftriebsläufer ausgebildet sind, sind in CN104314752A und JP2007270746A offenbart.

Der vorliegenden Erfindung liegt die Aufgabe zugrunde, einen Windkraftrotor und eine Windkraftanlage zur Verfügung zu stellen, welcher eigenständig anläuft, über einen großen Drehzahlbereich Leistung liefert, sowie weitere Nachteile des Standes der Technik überwindet.

Erfindungsgemäß wird diese Aufgabe durch einen Rotor mit den Merkmalen des unabhängigen Anspruchs 1 gelöst.

Ein erfindungsgemäßer Rotor ist für eine vertikale Windkraftanlage ausgebildet und umfasst eine Rotornabe und mindestens einen, mit der Rotornabe über Streben verbundenen Rotorflügel. Der Rotorflügel ist im Wesentlichen als Auftriebsläufer ausgebildet. Vorzugsweise hat der Rotorflügel einen im Wesentlichen tragflügelförmigen Querschnitt.

Erfindungsgemäß weist der Rotorflügel auf einer zur Rotornabe gerichteten Seite mindestens eine schwenkbare Klappe auf, wobei ein Ausklappmechanismus vorgesehen ist, der bei niedrigen Drehzahlen des Rotors die Klappe öffnet und bei steigender Drehzahl des Rotors die Klappe schließt. Insbesondere kann der Ausklappmechanismus derart ausgebildet sein, dass die Klappe beim Überschreiten eines Drehzahl-Schwellwerts in den Rotorflügel einklappt.

Die Klappe bildet im ausgeklappten Zustand einen Widerstandsläufer, der als Anlauferleichterung dient, und schaltet sich somit selbständig mit steigender Drehzahl durch Fliehkraft weg, wodurch das Verwenden von komplizierter Regelungstechnik wegfällt.

Mit dem erfindungsgemäßen Windkraftrotor sowie dem erfindungsgemäßen Rotorflügel ist es möglich, die Windenergie besonders effektiv zu nutzen. Die vorliegende Erfindung vereint die Vorteile des Widerstandsläufer, welcher ein gutes Anlaufverhalten aufweist, und des Auftriebsläufer, der einen hohen Wirkungsgrad hat, und ermöglicht somit eine optimale Leistungsumwandlung über einen große Drehzahlbereich.

Erfindungsgemäß kann vorgesehen sein, dass die Klappe von einer ausgeklappten Stellung um einen Winkelbereich von etwa 30° bis 45° in eine eingeklappte Stellung schwenkbar ist. Insbesondere kann die Klappe in der ausgeklappten Stellung etwa einen Winkel von 30° bis 45° zur Außenfläche des Rotorflügels aufweisen, sodass der Rotorflügel im ausgeklappten Zustand der Klappe als Widerstandsläufer wirkt.

Erfindungsgemäß kann vorgesehen sein, dass der Ausklappmechanismus auf die Klappe eine Kraft ausübt, welche entgegen der Fliehkraft der Klappe im Betrieb gerichtet ist und die Klappe im Ruhezustand ausklappt, wobei die Kraft geringer ist als die auf die Klappe bei einer vorgegebenen Drehzahl des Rotors einwirkende Fliehkraft.

Erfindungsgemäß kann der Ausklappmechanismus ein oder mehrere, im Rotorflügel und/oder in der Klappe angeordnete Magnetelemente, Federelemente oder dergleichen umfassen, wobei vorzugsweise im Rotorflügel und in der Klappe miteinander wechselwirkende Magnetelemente vorgesehen sind.

Erfindungsgemäß kann vorgesehen sein, dass der Rotorflügel eine Aufnahmekammer zur Aufnahme der Klappe im eingeklappten Zustand aufweist, wobei die Magnetelemente an einem Innenschenkel der Klappe und an einer Innenfläche der Aufnahmekammer angeordnet sind.

Erfindungsgemäß kann vorgesehen sein, dass der Rotorflügel eine Aufnahmekammer zur Aufnahme der Klappe im eingeklappten Zustand aufweist, wobei die Magnetelemente an einem Außenschenkel der Klappe und an einer Außenfläche der Aufnahmekammer angeordnet sind.

Erfindungsgemäß kann vorgesehen sein, dass zwischen dem Rotorflügel und der Klappe ein Spalt gebildet ist, wenn die Klappe ausgeklappt ist.

Erfindungsgemäß ist im Rotorflügel eine Umlenkkammer vorgesehen, welche die über die Klappe einströmende Luft im Rotorflügel umlenkt und durch Düsen in entgegengesetzter Richtung aus der Umlenkkammer ausströmen lässt.

Erfindungsgemäß kann vorgesehen sein, dass die Magnetelemente Elektromagnete und/oder Dauermagnete sind. Die magnetische Wechselwirkung zwischen den Magnetelementen im Rotorflügel und der Klappe kann durch einen Elektromagneten im Rotorflügel regelbar ausgestaltet sein.

Erfindungsgemäß kann vorgesehen sein, dass der Rotorflügel ein Mittelsegment und zwei Außensegmente aufweist, wobei die Klappe am Mittelsegment angeordnet ist.

Die Rotorflügeln können Winglets umfassen. Die Außensegmente können eine Verschränkung und/oder eine Pfeilung aufweisen. Es können drei, vier, fünf oder sechs im Wesentlichen identische Rotorflügel vorgesehen sein. Die Rotorflügel können eine im Wesentlichen symmetrische Profilform haben. Die Rotorflügel können jedoch auch eine im Wesentlichen asymmetrische Profilform haben.

Die Erfindung betrifft insbesondere einen Rotor für eine vertikale Windkraftanlage umfassend mindestens einen Rotorflügel, der als Auftriebsläufer ausgebildet ist, wobei der Rotorflügel über mindestens eine Klappe auf der Innenseite verfügt, wobei sich im Rotorflügel als auch in der Klappe Magnete befinden, welche bei niedrigen Drehzahlen aufgrund der magnetischen Wechselwirkung die Klappe öffnen und bei sich mit steigender Drehzahl aufgrund der Fliehkraft, welche auf die Klappe wirkt, schließen.

Zwischen Rotorflügel und Klappe kann ein Spalt entstehen, wenn die Klappe geöffnet ist. Es ist eine Umlenkkammer vorgesehen, welche die von hinten einströmenden Luftmassen im Rotorflügel umgelenkt und durch Düsen im hinteren Bereich des Rotorflügels ausströmen lässt.

Die Magnete können Elektromagnete und/oder Dauermagnete sein. Es kann vorgesehen sein, dass die magnetische Abstoßung zwischen den Magneten im Rotorflügel und der Klappe durch einen Elektromagneten im Rotorflügel geregelt werden kann.

Die Klappe kann nur an einem Teil des Rotorflügels als Mittelsegment angebracht sein. Die Rotorflügeln können mit Winglets ausgeführt sein. Es kann vorgesehen sein, dass Außensegmente am Rotorflügel vorgesehen sind, die eine Verschränkung und/oder Pfeilung haben. Die Rotorflügel können eine symmetrische oder asymmetrische Profilform haben.

Die Erfindung betrifft auch ein Windkraftwerk mit einem erfindungsgemäßen Rotor, insbesondere eine vertikale Windkraftanlage, umfassend einen, auf einer Lagerung drehbar angeordneten erfindungsgemäßen Rotor.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 eine isometrische Ansicht auf den erfindungsgemäßen Rotor,
Fig. 2 eine Draufsicht auf den erfindungsgemäßen Rotor
Fig. 3 eine Aufsicht auf den Querschnitt des erfindungsgemäßen Rotors,
Fig. 4 eine vergrößerte Aufsicht auf den Querschnitt des erfindungsgemäßen Rotorflügels,
Fig. 5a bis Fig. 5c vergrößerte Aufsichten auf die Gelenkverbindung eines Rotorflügels.

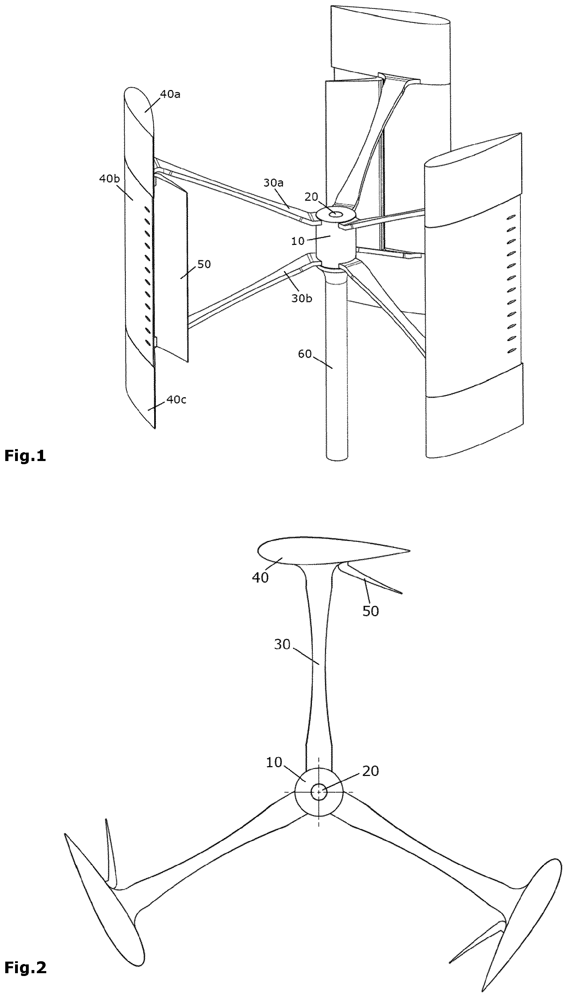

**Fig. 1** zeigt eine isometrische Ansicht einer Ausführungsform eines erfindungsgemäßen vertikal montierten Rotors einer vertikalen Windkraftanlage. In der Mitte befindet sich die Rotornabe 10. Die Rotornabe 10 ist mit der Rotorwelle 20 fest verbunden. Die Rotorwelle 20 ist in einer vertikalen Lagerung 60 drehbar gelagert. Zum Umwandeln der Rotationsenergie des Rotors in elektrische Energie wird unter dem Rotor ein Generator entweder direkt oder über ein Übersetzungsgetriebe angetrieben. Hierzu können verschiedene Generatortypen eingesetzt werden. Das Material des Rotors kann vorzugsweise leicht und witterungsbeständig sein. Zu diesem Zweck können Kunststoffe, Aluminium oder Verbundwerkstoffe zum Einsatz kommen. Zur Lagerung des Rotors kommen widerstandsarme Lager zum Einsatz.

In dieser Ausführungsform umfasst der Rotor drei vertikal verlaufende Rotorflügel 40, die jeweils mittels zwei Streben 30a, 30b mit der zentral angeordneten Rotornabe 10 verbunden sind. Die Rotorflügel 40 sind im Wesentlichen als Auftriebsläufer ausgebildet, haben also einen Querschnitt ähnlich dem eines Tragflügelprofils. Vorzugsweise umfassen die Rotorflügel 40 ein Innenrohr zur Versteifung.

Ein Rotorflügel 40 umfasst jeweils ein oberes Außensegment 40a, ein unteres Außensegment 40c und ein Mittelsegment 40b. Die Außensegmente 40a, 40c fungieren als reine Auftriebsläufer. Das Mittelsegment 40b umfasst auf seiner zur Rotornabe 10 gerichteten Seite eine Klappe 50, die bei niedrigen Drehzahlen des Rotors geöffnet ist, sodass das Mittelsegment 40b als Widerstandsläufer wirkt. Bei steigender Drehzahl des Rotors klappt sich die Klappe 50 aufgrund der Fliehkraft ein.

In **Fig. 2** wird eine Ausführungsform eines erfindungsgemäßen Rotors mit drei Rotorflügeln 40 gezeigt. Die Rotorflügel 40 sind über die Streben 30 mit der Rotornabe 10 verbunden. Die Rotornabe 10 ist auf der Rotorwelle 20 angebracht. Jeder Rotorflügel 40 weist auf seiner zur Rotornabe 10 gerichteten Seite eine Klappe 50 auf, die in dieser Darstellung geöffnet ist.

Der dargestellte Rotor ist ein Hybrid aus Widerstandläufer und Auftriebsläufer. Das Anlaufen erfolgt mit ausgefahrenen Klappen 50, also als Widerstandsläufer. Mit steigender Drehzahl fahren die Klappen 50 ein. Sobald die Klappen 50 vollständig eingefahren sind, arbeitet der Rotor als Auftriebsläufer.

In dieser Ausführungsform sind die Enden der Außensegmente 40a, 40c gerade abgeschnitten. Die Enden der Rotorflügel 40 können in alternativen Ausführungsformen mit Winglets ausgeführt sein, um die Randwirbelbildung zu minimieren. In einer weiteren Ausführungsform können die Anstellwinkel der Rotorflügel 40 variieren oder variabel sein.

In weiteren Ausführungsformen können die Rotorflügel 40 verschränkt und/oder gepfeilt werden. Unter Verschränkung versteht man das konstruktive Verwinden von Tragflächen. Als Pfeilung bezeichnet man eine nicht-parallele Anordnung des Tragflügels zur Rotorachse. In einer weiteren Ausführungsform verjüngen sich die Rotorflügel 40 zu ihrem Ende hin. In einer weiteren Ausführungsform sind die Rotoraußensegmente 40a, 40c zu den Enden hin verdrillt und bilden eine Helix-Form.

Beim Verdrillen weist ein Rotoraußensegment 40a, 40c eine positive und das andere eine negative Pfeilung auf, jedoch steht die Profilsehne des Tragflügels tangential zum Rotorumfang. Die Anzahl der Rotorflügel 40 kann variieren, bevorzugt sind jedoch zwei, drei oder vier Rotorflügel 40 vorgesehen.

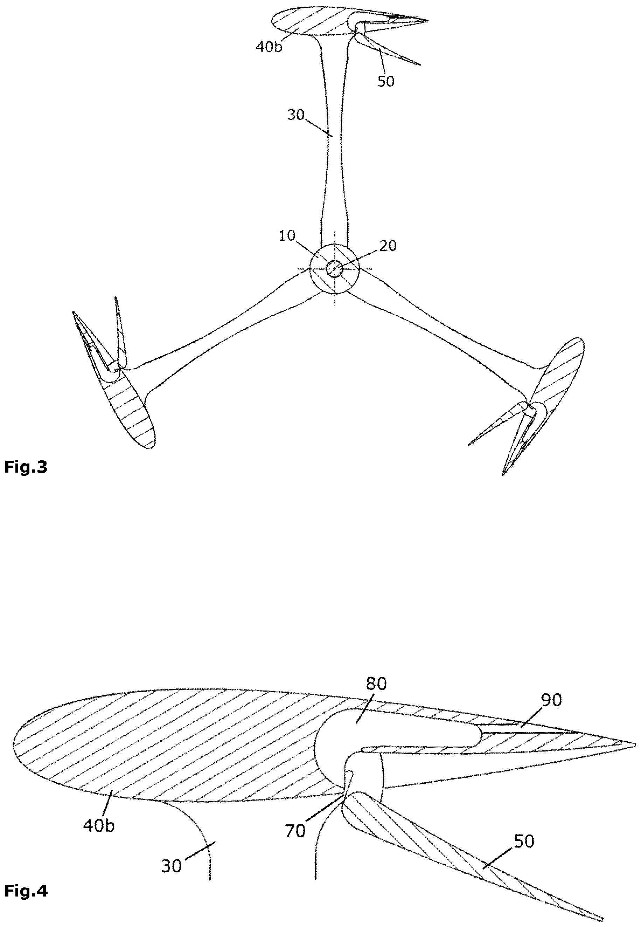

**Fig. 3** zeigt einen erfindungsgemäßen Rotor in einem Querschnitt. Die Rotorflügel 40 sind über die Streben 30 mit der Rotornabe 10 verbunden. Die Rotornabe 10 ist auf der Rotorwelle 20 angebracht. Das Mittelsegment 40b jedes Rotorflügels 40 weist eine Klappe 50 auf, die in dieser Darstellung jeweils geöffnet sind.

**Fig. 4** zeigt eine vergrößerte Ansicht des Mittelsegments 40b eines Rotorflügels 40 eines erfindungsgemäßen Rotors. Gezeigt ist die Klappe 50 im Mittelsegment 40b sowie der zwischen dem Mittelsegment 40b und der Klappe 50 gebildete Luftspalt 70.

Im Inneren des Mittelsegments 40b ist eine Umlenkkammer 80 vorgesehen, aus der eine Düse 90 nach außen führt, um eine eintreffende Luftströmung von der Klappe 50 durch die Umlenkkammer 80 nach außen zu lenken. Die Düse endet auf der Rotornabe 10 abgewandten Seite des Mittelsegments 40b.

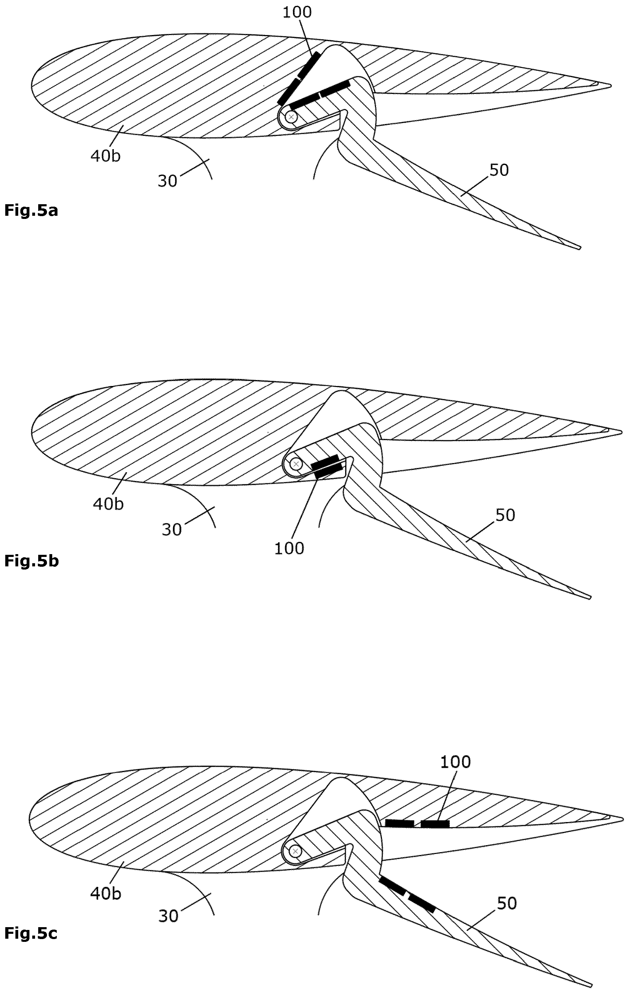

**Fig. 5a** bis **Fig. 5c** zeigen vergrößerte Schnittdarstellungen dreier Ausführungsformen des Mittelsegments 40b eines Rotorflügels 40 eines Rotors. Die Klappe 50 wird dabei jeweils durch magnetische Wechselwirkung unter Verwendung von Magnetelementen 100 geöffnet. Zu diesem Zweck sind im Mittelsegment 40b und in der Klappe 50 gegenüberliegende Magnetelemente 100 abgeordnet, die derart gepolt sind, dass die Klappe 50 im Ruhezustand des Rotors geöffnet ist. Mit steigenden Drehzahlen wird die Wechselwirkung der Magnetelemente 100 durch die Fliehkraft der Klappen 50 überwunden und die Klappen 50 schließen sich. In diesen Ausführungsbeispielen umfasst die Klappe 50 jeweils einen schwenkbar in einer Aufnahmekammer des Mittelsegments 40b gelagerten Innenschenkel und einen aus der Aufnahmekammer nach außen ragenden Außenschenkel. Die Aufnahmekammer weist zwei in einem Winkel von etwa 30° angeordnete Innenflächen zur Positionsbegrenzung des Innenschenkels sowie eine Außenfläche auf.

Gemäß **Fig. 5a** sind Magnetelemente 100 am Innenschenkel angeordnet und wirken mit Magnetelementen 100 an einer ersten Innenfläche der Aufnahmekammer zusammen. In dieser Ausführungsform sind die Magnetelemente derart gepolt, dass der Innenschenkel von der ersten Innenfläche der Aufnahmekammer abgestoßen wird und im Ruhezustand an der zweiten Innenfläche der Aufnahmekammer anliegt.

Gemäß **Fig. 5b** sind Magnetelemente 100 auf der gegenüberliegenden Seite des Innenschenkels angeordnet und wirken mit Magnetelementen 100 an der zweiten Innenfläche der Aufnahmekammer zusammen. In dieser Ausführungsform sind die Magnetelemente derart gepolt, dass der Innenschenkel von der zweiten Innenfläche der Aufnahmekammer angezogen wird, sodass er im Ruhezustand ebenfalls an der zweiten Innenfläche der Innenkammer anliegt.

Gemäß **Fig. 5c** sind Magnetelemente 100 am Außenschenkel angeordnet und wirken mit Magnetelementen 100 an der Außenfläche der Aufnahmekammer zusammen. In dieser Ausführungsform sind die Magnetelemente derart gepolt, dass der Außenschenkel von der Außenfläche der Aufnahmekammer abgestoßen wird, sodass der Innenschenkel im Ruhezustand ebenfalls an der zweiten Innenfläche der Aufnahmekammer anliegt.

Selbstverständlich können auch andere magnetische Anordnungen im Rahmen der vorliegenden Erfindung vorgesehen sein, um zu gewährleisten, dass die Klappe 50 im Ruhezustand des Rotors in einem aus dem Rotorflügel 40 ausgeklappten Zustand verbleibt. Neben magnetischen Mitteln können zu diesem Zweck auch mechanische Mittel, beispielsweise Klammern oder Feder, oder elektrische Mittel, beispielsweise Elektromagnete, erfindungsgemäß vorgesehen sein.

Die Erfindung beschränkt sich nicht auf die dargestellten Ausführungsbeispiele, sondern umfasst auch alternative Rotoren und Windkraftanlagen im Rahmen der nachfolgenden Patentansprüche.

### Bezugszeichenliste

- 10: Rotornabe
- 20: Rotorwelle
- 30, 30a, 30b: Strebe
- 40: Rotorflügel
- 40a: oberes Außensegment
- 40b: Mittelsegment
- 40c: unteres Außensegment
- 50: Klappe
- 60: Lagerung
- 70: Luftspalt
- 80: Umlenkkammer
- 90: Düse
- 100: Magnetelement

## Patentansprüche

1. Rotor für eine vertikale Windkraftanlage, umfassend mindestens einen Rotorflügel (40), der im Wesentlichen als Auftriebsläufer ausgebildet ist,
wobei der Rotorflügel (40) über mindestens eine Klappe (50) auf der Innenseite verfügt, wobei ein Ausklappmechanismus, vorzugsweise in Form von Magneten (100), insbesondere Elektromagnete und/oder Dauermagnete, im Rotorflügel (40) und in der Klappe (50), vorgesehen ist, wodurch bei niedrigen Drehzahlen die Klappe (50) geöffnet und bei steigender Drehzahl aufgrund der Fliehkraft, welche auf die Klappe (50) wirkt, die Klappe (50) geschlossen wird,
**dadurch gekennzeichnet, dass**
im Rotorflügel (40) eine Umlenkkammer (80) vorgesehen ist, welche die von hinten einströmenden Luftmassen im Rotorflügel (40) umlenkt und durch Düsen (90) im hinteren Bereich des Rotorflügels (40) ausströmen lässt.

2. Rotor nach Anspruch 1, **dadurch gekennzeichnet, dass** zwischen Rotorflügel (40) und Klappe (50) ein Spalt (70) entsteht, wenn die Klappe (50) geöffnet ist.

3. Rotor nach einem der Ansprüche 1 bis 2, **dadurch gekennzeichnet, dass** die magnetische Abstoßung zwischen den Magneten (100) im Rotorflügel (40) und der Klappe (50) durch einen Elektromagneten im Rotorflügel (40) geregelt werden kann.

4. Rotor nach einem der Ansprüche 1 bis 3, **dadurch gekennzeichnet, dass** die Klappe (50) nur an einem Teil des Rotorflügels (40) als Mittelsegment (40b) angebracht ist.

5. Rotor nach einem der Ansprüche 1 bis 4, **dadurch gekennzeichnet, dass** die Rotorflügeln (40) mit Winglets ausgeführt werden.

6. Rotor nach einem der Ansprüche 1 bis 5, **dadurch gekennzeichnet, dass** der Rotorflügel (40) ein Mittelsegment (40b) und zwei Außensegmente (40a, 40c) aufweist, wobei die Außensegmente (40a, 40c) eine Verschränkung und/oder eine Pfeilung aufweisen.

7. Rotor nach einem der Ansprüche 1 bis 6, **dadurch gekennzeichnet, dass** der Rotorflügel (40) über Streben (30, 30a, 30b) mit einer Rotornabe (10) verbunden ist, wobei die Klappe (50) schwenkbar auf der zur Rotornabe (10) gerichteten Seite angeordnet ist, und wobei der Ausklappmechanismus dazu ausgebildet ist, bei niedrigen Drehzahlen des Rotors die Klappe (50) zu öffnen und bei steigender Drehzahl des Rotors die Klappe (50) zu schließen.

8. Rotor nach einem der Ansprüche 1 bis 7, **dadurch gekennzeichnet, dass** die Klappe (50) von einer ausgeklappten Stellung um einen Winkelbereich von etwa 30° bis 45° in eine eingeklappte Stellung schwenkbar ist.

9. Rotor nach einem der Ansprüche 1 bis 8, **dadurch gekennzeichnet, dass** der Ausklappmechanismus auf die Klappe (50) eine Kraft ausübt, welche entgegen der Fliehkraft der Klappe (50) im Betrieb gerichtet ist und die Klappe (50) im Ruhezustand ausklappt, wobei die Kraft geringer ist als die auf die Klappe (50) bei einer vorgegebenen Drehzahl des Rotors (40) einwirkende Fliehkraft.

10. Rotor nach einem der Ansprüche 1 bis 9, **dadurch gekennzeichnet, dass** der Ausklappmechanismus ein oder mehrere, im Rotorflügel (40) und/oder in der Klappe (50) angeordnete Magnetelemente (100), Federelemente oder dergleichen umfasst, wobei vorzugsweise im Rotorflügel (40) und in der Klappe (50) miteinander wechselwirkende Magnetelemente (100) vorgesehen sind.

11. Rotor nach Anspruch 10, **dadurch gekennzeichnet, dass** der Rotorflügel (40) eine Aufnahmekammer zur Aufnahme der Klappe im eingeklappten Zustand aufweist, wobei die Magnetelemente (100) an einem Innenschenkel der Klappe (50) und an einer Innenfläche der Aufnahmekammer angeordnet sind.

12. Rotor nach Anspruch 10, **dadurch gekennzeichnet, dass** der Rotorflügel (40) eine Aufnahmekammer zur Aufnahme der Klappe im eingeklappten Zustand aufweist, wobei die Magnetelemente (100) an einem Außenschenkel der Klappe (50) und an einer Außenfläche der Aufnahmekammer angeordnet sind.

13. Rotor nach einem der Ansprüche 1 bis 12, **dadurch gekennzeichnet, dass** der Rotorflügel (40) ein Mittelsegment (40b) und zwei Außensegmente (40a, 40c) aufweist, wobei die Klappe (50) am Mittelsegment (40b) angeordnet ist.

14. Vertikale Windkraftanlage, umfassend einen, auf einer Lagerung (60) drehbar angeordneten Rotor gemäß einem der Ansprüche 1 bis 13.

## Claims

1. A rotor for a vertical wind turbine, comprising at least one rotor blade (40) which is substantially designed as a lift device,
wherein the rotor blade (40) has at least one flap (50) on the inner side, wherein a fold-out mechanism, preferably in the form of magnets (100), in particular electromagnets and/or permanent magnets, is provided in the rotor blade (40) and in the flap (50), causing the flap (50) to open at low rotational speeds and causing the flap (50) to close at increasing rotational speeds due to the centrifugal force acting on the flap (50),
**characterised in that**
a deflection chamber (80) is provided in the rotor blade (40), which deflects the air masses flowing in from the back in the rotor blade (40) and allows them to flow out through nozzles (90) in the rear region of the rotor blade (40).

2. The rotor according to claim 1, **characterised in that** a gap (70) is created between the rotor blade (40) and the flap (50) when the flap (50) is open.

3. The rotor according to one of claims 1 to 2, **characterised in that** the magnetic repulsion between the magnets (100) in the rotor blade (40) and the flap (50) may be controlled by an electromagnet in the rotor blade (40).

4. The rotor according to one of claims 1 to 3, **characterised in that** the flap (50) is only attached to one part of the rotor blade (40) as a centre segment (40b).

5. The rotor according to one of claims 1 to 4, **characterised in that** the rotor blades (40) are configured with winglets.

6. The rotor according to one of claims 1 to 5, **characterised in that** the rotor blade (40) has a centre segment (40b) and two outer segments (40a, 40c), wherein the outer segments (40a, 40c) have a twist and/or a sweep.

7. The rotor according to one of claims 1 to 6, **characterised in that** the rotor blade (40) is connected to a rotor hub (10) via struts (30, 30a, 30b), wherein the flap (50) is arranged pivotable on the side directed towards the rotor hub (10), and wherein the fold-out mechanism is designed to open the flap (50) at low rotational speeds of the rotor and to close the flap (50) at increasing rotational speeds of the rotor.

8. The rotor according to one of claims 1 to 7, **characterised in that** the flap (50) is pivotable from an unfolded position into a folded position by an angular range of about 30° to 45°.

9. The rotor according to one of claims 1 to 8, **characterised in that** the fold-out mechanism exerts a force on the flap (50) which is directed against the centrifugal force of the flap (50) during operation and folds out the flap (50) when at rest, wherein the force is less than the centrifugal force that acts on the flap (50) at a predetermined rotational speed of the rotor (40).

10. The rotor according to one of claims 1 to 9, **characterised in that** the fold-out mechanism comprises one or more magnetic elements (100), spring elements or the like arranged in the rotor blade (40) and/or in the flap (50), wherein magnetic elements (100) interacting with one another are preferably provided in the rotor blade (40) and in the flap (50).

11. The rotor according to claim 10, **characterised in that** the rotor blade (40) has a receiving chamber for receiving the flap in the folded state, wherein the magnetic elements (100) are arranged on an inner leg of the flap (50) and on an inner surface of the receiving chamber.

12. The rotor according to claim 10, **characterised in that** the rotor blade (40) has a receiving chamber for receiving the flap in the folded state, wherein the magnetic elements (100) are arranged on an outer leg of the flap (50) and on an exterior surface of the receiving chamber.

13. The rotor according to one of claims 1 to 12, **characterised in that** the rotor blade (40) has a centre segment (40b) and two outer segments (40a, 40c), wherein the flap (50) is arranged on the centre segment (40b).

14. A vertical wind turbine, comprising a rotor according to any one of claims 1 to 13, being rotatably arranged on a bearing (60).

## Revendications

1. Rotor pour une éolienne verticale, comprenant au moins une pale de rotor (40) qui est conçue essentiellement comme un capteur à portance, la pale de rotor (40) disposant d'au moins un volet (50) sur le côté intérieur, un mécanisme de déploiement, de préférence sous forme d'aimants (100), en particulier d'électroaimants et/ou d'aimants permanents, étant prévu dans la pale de rotor (40) et dans le volet (50), ce qui permet d'ouvrir le volet (50) à faible vitesse de rotation et de le fermer à vitesse de rotation croissante en raison de la force centrifuge qui agit sur le volet (50),
**caractérisé en ce qu'**il est prévu dans la pale de rotor (40) une chambre de déviation (80) qui dévie les masses d'air entrant par l'arrière dans la pale de rotor (40) et les fait sortir par des buses (90) dans la zone arrière de la pale de rotor (40).

2. Rotor selon la revendication 1, **caractérisé en ce qu'**un espace (70) est créé entre la pale de rotor (40) et le volet (50) lorsque le volet (50) est ouvert.

3. Rotor selon l'une des revendications 1 à 2, **caractérisé en ce que** la répulsion magnétique entre les aimants (100) dans la pale de rotor (40) et le volet (50) peut être contrôlée par un électroaimant dans la pale de rotor (40).

4. Rotor selon l'une des revendications 1 à 3, **caractérisé en ce que** le volet (50) n'est monté que sur une partie de la pale de rotor (40) en tant que segment central (40b).

5. Rotor selon l'une des revendications 1 à 4, **caractérisé en ce que** les pales de rotor (40) sont réalisées avec des winglets.

6. Rotor selon l'une des revendications 1 à 5, **caractérisé en ce que** la pale de rotor (40) comprend un segment central (40b) et deux segments extérieurs (40a, 40c), les segments extérieurs (40a, 40c) présentant un entrelacement et/ou une flèche d'aile.

7. Rotor selon l'une des revendications 1 à 6, **caractérisé en ce que** la pale de rotor (40) est reliée à un moyeu de rotor (10) par des entretoises (30, 30a, 30b), le volet (50) étant disposé de manière pivotante sur le côté orienté vers le moyeu de rotor (10), et le mécanisme de déploiement étant conçu pour ouvrir le volet (50) à faible vitesse de rotation du rotor et pour fermer le volet (50) à vitesse de rotation du rotor croissante.

8. Rotor selon l'une des revendications 1 à 7, **caractérisé en ce que** le volet (50) peut pivoter d'une position déployée à une position repliée sur une plage angulaire d'environ 30° à 45°.

9. Rotor selon l'une des revendications 1 à 8, **caractérisé en ce que** le mécanisme de déploiement exerce sur le volet (50) une force dirigée en sens inverse de la force centrifuge du volet (50) en fonctionnement et déploie le volet (50) au repos, ladite force étant inférieure à la force centrifuge exercée sur le volet (50) pour une vitesse de rotation donnée du rotor (40).

10. Rotor selon l'une des revendications 1 à 9, **caractérisé en ce que** le mécanisme de déploiement comprend un ou plusieurs éléments magnétiques (100), éléments élastiques ou similaires disposés dans la pale de rotor (40) et/ou dans le volet (50), des éléments magnétiques (100) interagissant de préférence entre eux étant prévus dans la pale de rotor (40) et dans le volet (50).

11. Rotor selon la revendication 10, **caractérisé en ce que** la pale de rotor (40) présente une chambre de réception pour recevoir le volet à l'état replié, les éléments magnétiques (100) étant disposés sur une branche intérieure du volet (50) et sur une surface intérieure de la chambre de réception.

12. Rotor selon la revendication 10, **caractérisé en ce que** la pale de rotor (40) présente une chambre de réception pour recevoir le volet à l'état replié, les éléments magnétiques (100) étant disposés sur une branche extérieure du volet (50) et sur une surface extérieure de la chambre de réception.

13. Rotor selon l'une des revendications 1 à 12, **caractérisé en ce que** la pale de rotor (40) comprend un segment central (40b) et deux segments extérieurs (40a, 40c), le volet (50) étant disposé sur le segment central (40b).

14. Éolienne verticale, comprenant un rotor selon l'une des revendications 1 à 13 monté en rotation sur un palier (60).
